# FASCICULE DE BREVET EUROPEEN

(11) **EP 1 353 476 B1**
(45) Date de publication et mention de la délivrance du brevet: **16.07.2008**
(21) Numéro de dépôt: 03290908.7
(22) Date de dépôt: 11.04.2003
(51) Int. Cl.: H04L 12/28

(54) **Procédé pour sécuriser une liaison entre un terminal de données et un réseau local informatique, et terminal de données pour la mise en oeuvre de ce procédé**
Verfahren zur Sicherung einer Verbindung zwischen einem Daten-Endgerät und einem lokalen Netzwerk, sowie Daten-Endgerät für dieses Verfahren
Method for securing a link between a data terminal and a local area network, and the corresponding data terminal to implement such a method

(30) Priorité: 11.04.2002 FR 0204524
(43) Date de publication de la demande: 15.10.2003
(73) Titulaire: Alcatel Lucent, 75008 Paris (FR)
(72) Inventeur: Issenmann, Edouard, 78150 Le Chesnay (FR); Poiraud, Patrick, 78350 Jouy-en-Josas (FR)
(74) Mandataire: Korakis-Ménager, Sophie

(56) Documents cités:
- EP-A- 1 146 692
- EP-A- 1 178 644
- EP-A- 1 257 141
- US-A1- 2002 036 991
- US-A1- 2002 052 965

## Description

L'invention concerne un procédé pour sécuriser une liaison, notamment une liaison radio, entre un terminal de données et un réseau local informatique, et concerne un terminal de données pour la mise en oeuvre de ce procédé.

L'échange de données entre un premier terminal de données mobile et un second terminal de données distant est possible via un terminal radiotéléphonique en liaison avec un réseau de radiotéléphonie. On relie le terminal de données au terminal radiotéléphonique, au moyen d'un câble par exemple. Mais le débit des données est faible, en l'état actuel des réseaux de radiotéléphonie. On connaît un autre procédé, permettant un débit élevé : Il consiste à connecter le terminal de données à un réseau local informatique, notamment un réseau local sans fil conforme à la norme IEEE 802.11b. Des réseaux locaux sans fil sont spécialement installés dans certains lieux tels que des hôtels, des aéroports, etc... Par exemple, un ordinateur portable peut être relié à un tel réseau en insérant dans un port de cet ordinateur une carte radio compatible avec la norme IEEE 802.11b. Un tel réseau permet un débit de données élevé, mais il doit mettre en oeuvre un procédé pour sécuriser cette liaison, c'est à dire pour authentifier l'identité de l'usager qui se connecte, et d'autre part protéger les données contre une interception, avec un niveau de sécurité au moins aussi bon que celui procuré par un réseau radiotéléphonique.

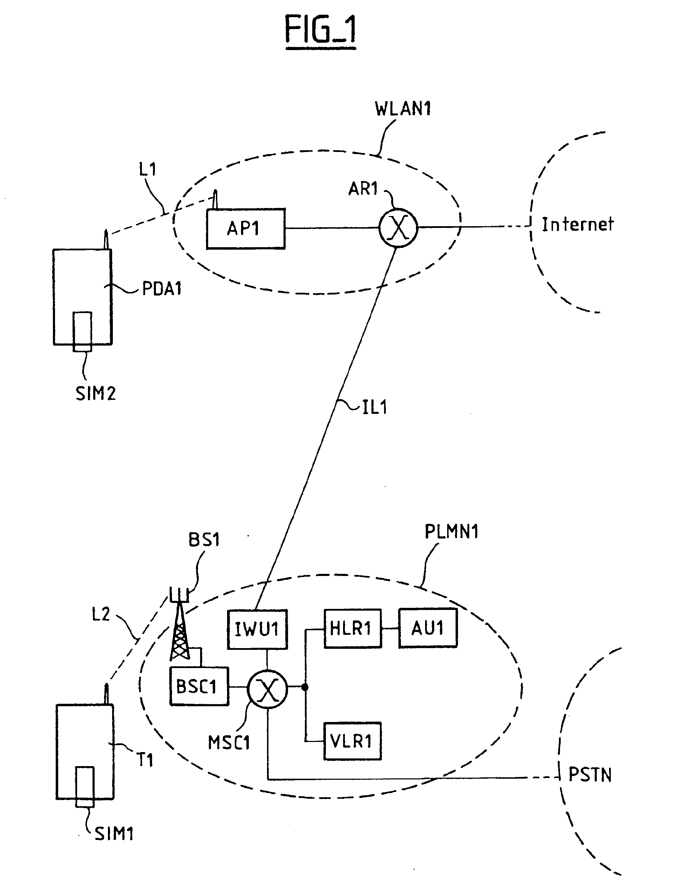

La **figure 1** illustre un procédé connu permettant de sécuriser une liaison entre un terminal de données, par exemple un assistant personnel numérique PDA1 et un réseau local informatique sans fil, WLAN1. Le réseau WLAN1 comprend des points d'accès radio tels que AP1, et un routeur d'accès AR1. Il est relié à un réseau de radiotéléphonie PLMN1, de type GSM par exemple, par une liaison d'interfonctionnement IL1. Le réseau WLAN1 est aussi relié à Internet via le routeur d'accès AR1.

Le réseau PLMN1 comporte des stations de base telles que la station BS1, reliées à un centre de commutation du service mobile, tel que MSC1, via un contrôleur des stations de base, tel que BSC1. Le centre de commutation MSC1 est relié en outre au réseau téléphonique public fixe PSTN, à un enregistreur nominal de localisation HLR1, et à un enregistreur de localisation de visiteurs VLR1. L'enregistreur nominal de localisation HLR1 est relié à un centre d'authentification AU1. La liaison d'interfonctionnement IL1 relie le routeur d'accès AR1 au centre de commutation du service mobile MSC1 via une unité d'interfonctionnement IWU1 qui a une fonction d'interface telle que les paramètres de sécurité venant du réseau local sans fil WLAN1 sont vus par le centre de commutation MSC1 comme s'il provenaient d'un contrôleur de station de bases, tel que BSC1.

Tout d'abord, rappelons quelle est la procédure utilisée classiquement pour sécuriser une liaison radio L2 entre un terminal radiotéléphonique T1, par exemple, et le réseau radiotéléphonique PLMN1 de type GSM, sachant qu'une procédure analogue mais améliorée existe avec l'UMTS. Le terminal T1 est muni, comme tout terminal radiotéléphonique de type GSM, d'une carte d'identification d'abonné, SIM1. Cette carte SIM1 contient notamment une clé de chiffrement Ki, secrète et qui lui est propre. Le centre d'authentification AU1 contient une copie de cette clé de chiffrement Ki.

A la suite d'une demande de paramètres de sécurité par le HLR1, le centre d'authentification AU1 choisit un nombre aléatoire RAND1 et calcule une signature SRES1, à l'aide de la clé secrète Ki propre au terminal T1, avec un premier algorithme qui est connu aussi de la carte SIM 1 ; et il calcule une clé de chiffrement Kc avec un second algorithme qui est connu aussi du la carte SIM1. L'ensemble de ces trois valeurs RAND1, Ki, SRES1, formant un « triplet », est envoyé à l'enregistreur de localisation de visiteurs VLR1. Plusieurs triplets peuvent être envoyés et stockés dans le VLR1 pour le même terminal T1.

Chaque triplet RAND, Ki, SRES est utilisé par l'enregistreur de localisation de visiteurs VLR1 pour l'authentification d'un appel et pour le chiffrement/déchiffrement des informations transmises après l'établissement d'une communication, les informations transmises dans les deux sens en étant chiffrées avec la clé Kc.

Lorsque le terminal radiotéléphonique T1 demande l'établissement d'une communication avec le réseau radiotéléphonique PLMN1, il est pris en charge par l'enregistreur de localisation de visiteurs, VLR1, qui dessert la zone où il est situé. Le terminal T1 envoie son identité internationale d'abonné mobile, appelée IMSI1, ou son identité temporaire d'abonné mobile, appelée TMSI1, à l'enregistreur de localisation de visiteurs VLR1. Par cette identité IMSI1 ou TMSI1, l'enregistreur de localisation de visiteurs VLR1 détermine l'enregistreur nominal de localisation HLR1 qui gère ce terminal T1, et peut retrouver dans sa mémoire les triplets relatifs à ce terminal. S'il ne dispose plus de triplets pour ce terminal, il appelle l'enregistreur nominal de localisation HLR1 et lui communique l'identité IMSI1 du terminal T1, et sa propre identité. L'enregistreur nominal de localisation HLR1 interroge alors le centre d'authentification AU1 pour obtenir des triplets et les envoyer à l'enregistreur de localisation de visiteurs VLR1.

Le procédé connu pour sécuriser une liaison entre le terminal de données PDA1 et le point d'accès AP1 comporte une procédure analogue à celle rappelée ci-dessus, sauf que les échanges d'informations ne sont pas supportés par une liaison radio GSM avec le réseau PLMN1, mais sont supportés par une liaison radio L1 avec le réseau local sans fil WLAN1, et la liaison d'interfonctionnement IL1.

Le terminal de données PDA1 est muni d'un lecteur de carte d'identification, dans lequel est insérée une carte d'identification SIM2, analogue à la carte d'identification d'abonné mobile SIM1. Il comporte des moyens logiciels pour exécuter une procédure analogue à celle rappelée ci-dessus. Ainsi le réseau local informatique sans fil WLAN1 bénéficie du service d'authentification offert par le centre AU 1, grâce à la liaison d'interfonctionnement IL1 entre les réseaux WLAN1 et PLMN1.

Cependant ce procédé connu a deux inconvénients. Le terminal PDA1 doit comporter un lecteur de carte d'identification. L'usager d'un terminal radiotéléphonique T1 et d'un terminal de données PDA1 doit avoir deux cartes d'identification, SIM1 et SIM2, et donc deux abonnements, ou bien il doit déplacer une carte SIM unique d'un terminal à un autre, ce qui n'est pas pratique. D'autre part, cela ne permet pas de commencer une communication dans un réseau local sans fil puis la poursuivre dans un réseau de radiotéléphonie, ou inversement, sans interrompre cette communication. Par ailleurs il n'y a pas synchronisation entre les données mémorisées dans le terminal de données PDA1 d'une part, et les données mémorisées dans le terminal radiotéléphonique T1 d'autre part, telles que les données du carnet d'adresses.

Une solution différente est proposée dans EP 1 146 692.

Le but de l'invention est de remédier à ces inconvénients.

L'objet de l'invention est un procédé pour sécuriser une liaison, entre un terminal de données et un réseau local informatique qui est couplé à un réseau de radiotéléphonie mobile qui dispose d'un centre d'authentification ; **caractérisé** en ce qu'il consiste à :
- relier le terminal de données à un terminal radiotéléphonique qui comporte des moyens pour exécuter une procédure susceptible de sécuriser une liaison radio entre ce terminal radiotéléphonique et le réseau radiotéléphonique, cette procédure consistant notamment en un échange d'informations de sécurité avec le réseau radiotéléphonique, cet échange étant usuellement supporté par une liaison radio entre le terminal radiotéléphonique et le réseau radiotéléphonique ;
- exécuter, dans le terminal radiotéléphonique, cette même procédure, mais en faisant supporter l'échange d'informations de sécurité par la liaison entre le terminal de données et le réseau local informatique, et par une liaison d'interfonctionnement reliant le réseau local informatique sans fil et le réseau radiotéléphonique ;
- puis transférer le résultat de cette procédure du terminal radiotéléphonique vers le terminal de données.

Le procédé ainsi caractérisé permet à un centre d'authentification créé pour un réseau radiotéléphonique de sécuriser une liaison radio entre un terminal de données et un réseau local informatique, avec le même niveau de sécurité que pour une liaison radio dans un réseau radiotéléphonique classique, parce qu'il utilise essentiellement la même procédure. Mais il ne nécessite pas de carte d'identification pour un terminal de données, et pas de lecteur de carte dans ce terminal de données, puisque ce procédé fait collaborer un terminal radiotéléphonique avec ce terminal de données, de telle sorte que le centre d'authentification ne voit qu'une seule entité à l'autre bout de la liaison.

L'invention a aussi pour objet un terminal de données comportant des moyens pour établir une liaison avec un réseau local informatique et des moyens pour établir une liaison avec un terminal radiotéléphonique comportant des moyens pour exécuter une procédure susceptible de sécuriser une liaison radio entre ce terminal radiotéléphonique et un réseau radiotéléphonique qui dispose d'un centre d'authentification, cette procédure consistant notamment en un échange d'informations de sécurité avec le réseau radiotéléphonique, cet échange étant usuellement supporté par une liaison radio entre le terminal radiotéléphonique) et le réseau radiotéléphonique ;
caractérisé en ce que pour la mise en oeuvre du procédé selon l'invention, il comporte :
- des moyens pour commander l'exécution de cette procédure, dans ce terminal radiotéléphonique, en faisant supporter l'échange d'informations de sécurité par une liaison entre le terminal de données et le réseau local informatique, et par une liaison d'interfonctionnement reliant le réseau local informatique et le réseau radiotéléphonique ;
- et des moyens pour faire transférer le résultat de cette procédure, du terminal radiotéléphonique vers le terminal de données, et utiliser ce résultat pour chiffrer et déchiffrer les données échangées ensuite sur cette liaison entre le terminal de données et le réseau local informatique.

L'invention sera mieux comprise et d'autres caractéristiques apparaîtront à l'aide de la description ci-dessous et des figures l'accompagnant :
- La **figure 1** déjà décrite ci-dessus illustre le procédé connu.

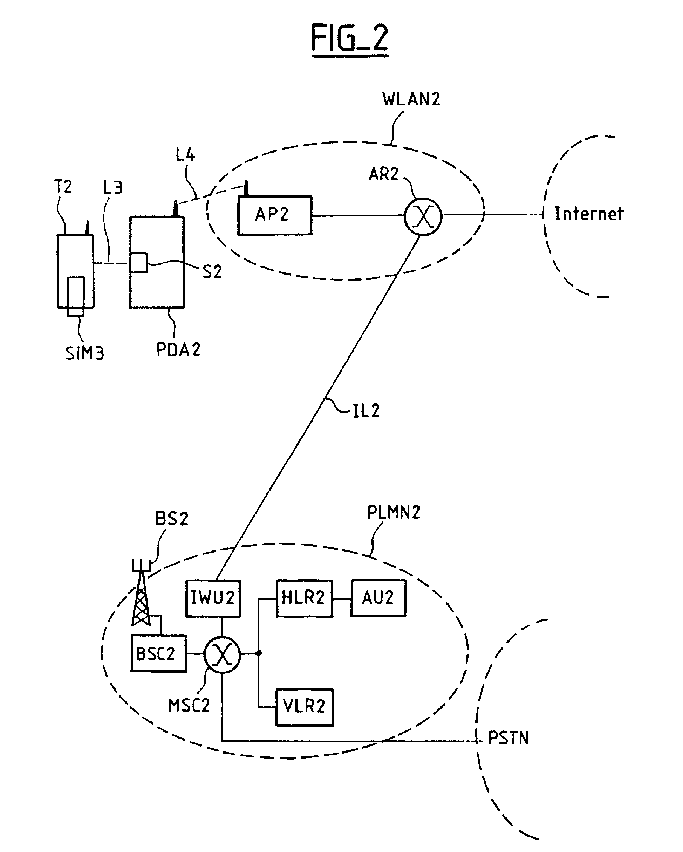

- La **figure 2** illustre un exemple de mise en oeuvre du procédé selon l'invention, pour sécuriser une liaison radio L4 entre un terminal de données PDA2 et un réseau local sans fil, WLAN2.

Le terminal PDA2 est par exemple un assistant personnel numérique classique mais muni de moyens logiciels S2 dits d'interfonctionnement, adaptés pour mettre en oeuvre le procédé selon l'invention. Il n'a pas besoin de comporter un lecteur de carte. Il est relié à un terminal radiotéléphonique classique T2, de type GSM ou UMTS, par une liaison L3 usuellement utilisée pour échanger des données. Cette liaison L3 peut être un câble, un faisceau infrarouge, ou une liaison radio bluetooth. Le terminal T2 comporte un lecteur de carte d'identification, dans lequel est inséré une carte d'identification SIM3 qui est utilisée usuellement pour sécuriser une liaison radio entre ce terminal T2 et un réseau radiotéléphonique PLMN2, de type GSM, auquel est abonné ce terminal T2.

Le réseau WLAN2 comprend des points d'accès radio tels que AP2, et un routeur d'accès AR2. Il est relié au réseau de radiotéléphonie PLMN2 par une liaison d'interfonctionnement. Le réseau WLAN2 est aussi relié à Internet via le routeur d'accès AR2.

Le réseau PLMN2 comporte des stations de base telles que la station BS2, reliées à un centre de commutation du service mobile, tel que MSC2, via un contrôleur des stations de base, tel que BSC2. Le centre de commutation MSC 2 est relié en outre au réseau téléphonique public fixe PSTN, à un enregistreur nominal de localisation HLR2, et à un enregistreur de localisation de visiteurs VLR2. L'enregistreur nominal de localisation HLR2 est relié à un centre d'authentification AU2. La liaison d'interfonctionnement IL2 relie le routeur d'accès AR2 au centre de commutation du service mobile MSC2 via une unité d'interfonctionnement IWU2 qui a une fonction d'interface telle que les paramètres de sécurité venant du réseau local sans fil WLAN2 sont vus par le centre de commutation MSC2 comme s'il provenaient d'un contrôleur de station de bases, tel que BSC2.

Les moyens logiciels d'interfonctionnement S2 collaborent avec la carte SIM3 pour exécuter la procédure de sécurisation de la liaison L4, en utilisant les fonctions classiques prévues pour les applications des cartes d'identification des terminaux radiotéléphoniques. Les échanges d'information de sécurité avec le PLMN2 sont supportés par la liaison radio L4, le point d'accès radio AP2, le routeur d'accès AR2, la liaison d'interfonctionnement IL2, l'unité d'interfonctionnement IWU2, et le centre de commutation du service mobile MSC2.

Lorsque le terminal de données PDA2 demande l'établissement d'une liaison radio L4 avec le réseau WLAN2, les moyens logiciels d'interfonctionnement S2 exécutent la procédure d'authentification et de chiffrement en commandant les opérations nécessaires dans la carte SIM3. L'ensemble du terminal T2 et du terminal PDA2 est vu par le réseau radiotéléphonique PLMN2 comme une seule entité et il est pris en charge par l'enregistreur de localisation de visiteurs, VLR2, qui est associé au centre de commutation du service mobile MSC2 auquel est reliée la liaison d'interfonctionnement IL2.

Le terminal T2 envoie son identité internationale d'abonné mobile, appelée IMSI2, à l'enregistreur de localisation de visiteurs VLR2. Par cette identité IMSI2, l'enregistreur de localisation de visiteurs VLR2 détermine l'enregistreur nominal de localisation HLR2 qui gère ce terminal T2, et peut retrouver dans sa mémoire les triplets relatifs à ce terminal. S'il ne dispose plus de triplets pour ce terminal, il appelle l'enregistreur nominal de localisation HLR2 et lui communique l'identité IMSI2 du terminal T2, et sa propre identité. L'enregistreur nominal de localisation HLR2 interroge alors le centre d'authentification AU2 pour obtenir des triplets et les envoyer à l'enregistreur de localisation de visiteurs VLR2.

A la suite de cette demande de l'enregistreur nominal de localisation HLR2, le centre d'authentification AU2 choisit un nombre aléatoire RAND2 et calcule une signature SRES2, à l'aide de la clé secrète Ki propre au terminal T2, avec un premier algorithme qui est connu aussi de la carte SIM2 ; et il calcule une clé de chiffrement Kc avec un second algorithme qui est connu aussi du la carte SIM2. L'ensemble de ces trois valeurs RAND2, Ki, SRES2, formant un « triplet », est envoyé à l'enregistreur de localisation de visiteurs VLR2. Plusieurs triplets peuvent être envoyés et stockés dans le VLR2, pour le même terminal T2.

Ce triplet RAND2, Ki, SRES2 est utilisé par l'enregistreur de localisation de visiteurs VLR2 pour l'authentification de l'appel émis par l'ensemble T2-PDA2, en vérifiant la valeur SRES2 envoyée par l'ensemble T2-PDA2.

La carte SIM3 calcule la clé de chiffrement Kc, avec le second algorithme, à partir du nombre RAND2. Le terminal de données PDA2 commande le transfert de cette clé Kc vers ce terminal PDA2 pour l'utiliser ensuite, pour le chiffrement/déchiffrement des données échangées sur la liaison radio L4 avec le réseau local WLAN2, alors que l'enregistreur de localisation de visiteurs VLR2 communique cette même clé Kc au point d'accès radio AP2, à l'autre bout de la liaison radio L4. La liaison radio L4, entre le terminal PDA2 et le réseau local WLAN 2, est ainsi protégée contre une interception des données, avec un niveau de sécurité identique à celui du réseau radiotéléphonique PLMN2.

La liaison radio L4 peut être de tout type connu (IEEE 803.11a, 802.11b, bluetooth, ...etc) ou futur.

Selon une variante de mise en oeuvre, le procédé selon l'invention est appliqué dans un terminal de données qui n'est pas relié à un réseau local informatique par une liaison radio, mais par une liaison infrarouge, ou un simple câble, comme dans les réseaux locaux informatiques les plus classiques.

Il est à remarquer que la liaison L3 entre le terminal de données PDA2 et le terminal téléphonique T2 conserve toutes ses fonctions habituelles, et permet par exemple une synchronisation des données de ces deux terminaux. Il est à remarquer aussi que le terminal radiotéléphonique T2 conserve toutes ses fonctions habituelles, et permet par exemple une liaison GPRS pour échanger des paquets de données avec le réseau radiotéléphonique PLMN2 pendant que le terminal de données PDA2 communique avec le réseau local WLAN2 via la liaison L4.

La portée de l'invention n'est pas limitée aux terminaux et réseaux radiotéléphoniques GSM. Elle est applicable de manière analogue avec des terminaux et réseaux radiotéléphoniques mettant en oeuvre des procédures d'authentification et de chiffrement similaires ou dérivées de celles de type GSM.

## Revendications

1. Procédé pour sécuriser une liaison (L4), entre un terminal de données (PDA2) et un réseau local informatique (WLAN2) qui est couplé à un réseau de radiotéléphonie mobile (PLMN2) qui dispose d'un centre d'authentification (AU2) ; **caractérisé en ce qu'**il consiste à :
- relier (L3) le terminal de données (PDA2) à un terminal radiotéléphonique (T2) qui comporte des moyens (SIM3) pour exécuter une procédure susceptible de sécuriser une liaison radio entre ce terminal radiotéléphonique (T2) et le réseau radiotéléphonique (PLMN2), cette procédure consistant notamment en un échange d'informations de sécurité avec le réseau radiotéléphonique (PLMN2), cet échange étant usuellement supporté par une liaison radio entre le terminal radiotéléphonique (T2) et le réseau radiotéléphonique (PLMN2) ;
- exécuter, dans le terminal radiotéléphonique (T2), cette même procédure, mais en faisant supporter l'échange d'informations de sécurité par la liaison (L4) entre le terminal de données (PDA2) et le réseau local informatique (WLAN2), et par une liaison d'interfonctionnement (IL2, IWU2) reliant le réseau local informatique sans fil (WLAN2) et le réseau radiotéléphonique (PLMN2) ;
puis transférer le résultat de cette procédure du terminal radiotéléphonique (T2) vers le terminal de données (PDA2).

2. procédé selon la revendication 1, **caractérisé en ce que** le résultat de la procédure est la production d'une clé de chiffrement qui est transférée d'une part du terminal radiotéléphonique (T2) vers le terminal de données (PDA2), et d'autre part du réseau radiotéléphonique (PLMN2) à un point d'accès (AP2) du réseau local (WLAN2) ;
et **en ce que** cette clé est utilisée pour chiffrer et déchiffrer les données échangées ensuite sur cette liaison (L4) entre le terminal de données (PDA2) et le réseau local informatique (WLAN2) .

3. Procédé selon la revendication 1, **caractérisé en ce que** le réseau local informatique (WLAN2) est un réseau sans fil conforme à la norme IEEE802.11.

4. Procédé selon la revendication 1, **caractérisé en ce que** le réseau local informatique (WLAN2) est un réseau sans fil conforme à la norme Bluetooth.

5. Procédé selon la revendication 1, **caractérisé en ce que** le réseau local informatique (WLAN2) est un réseau sans fil à liaison infrarouge.

6. Procédé selon la revendication 1, **caractérisé en ce que** le réseau local informatique (WLAN2) est un réseau filaire.

7. Terminal de données (PDA2) comportant des moyens pour établir une liaison (L4) avec un réseau local informatique (WLAN2) et des moyens pour établir une liaison (L3) avec un terminal radiotéléphonique (T2) comportant des moyens (SIM3) pour exécuter une procédure susceptible de sécuriser une liaison radio entre ce terminal radiotéléphonique (T2) et un réseau radiotéléphonique (PLMN2) qui dispose d'un centre d'authentification (AU2), cette procédure consistant notamment en un échange d'informations de sécurité avec le réseau radiotéléphonique (PLMN2), cet échange étant usuellement supporté par une liaison radio entre le terminal radiotéléphonique (T2) et le réseau radiotéléphonique (PLMN2) ;
**caractérisé en ce que** pour la mise en oeuvre du procédé selon la revendication 1, il comporte :
- des moyens (S2) pour commander l'exécution de cette procédure, dans ce terminal radiotéléphonique (T2), en faisant supporter l'échange d'informations de sécurité par une liaison (L4) entre le terminal de données (PDA2) et le réseau local informatique (WLAN2), et par une liaison d'interfonctionnement (IL2, IWU2)) reliant le réseau local informatique (WLAN2) et le réseau radiotéléphonique (PLMN2) ;
- et des moyens (S2) pour faire transférer le résultat de cette procédure, du terminal radiotéléphonique (T2) vers le terminal de données (PDA2), et utiliser ce résultat pour chiffrer et déchiffrer les données échangées ensuite sur cette liaison (L4) entre le terminal de données (PDA2) et le réseau local informatique (WLAN2).

8. Terminal de données selon la revendication 7, **caractérisé en ce que** la liaison (L4) avec un réseau local informatique (WLAN2) est une liaison sans fil conforme à la norme IEEE802.11.

9. Terminal de données selon la revendication 7, **caractérisé en ce que** la liaison (L4) avec un réseau local informatique (WLAN2) est une liaison sans fil conforme à la norme Bluetooth.

10. Terminal de données selon la revendication 7, **caractérisé en ce que** la liaison (L4) avec un réseau local informatique (WLAN2) est une liaison infrarouge.

11. Terminal de données selon la revendication 7, **caractérisé en ce que** la liaison (L4) avec un réseau local informatique (WLAN2) est une liaison filaire.

## Claims

1. A method of making secure a link (L4) between a data terminal (PDA2) and a data processing local area network (WLAN2) that is coupled to a mobile telephone network (PLMN2) that includes an authentication center (AU2), which method is **characterized in that** it consists in:
- linking (L3) the data terminal (PDA2) to a mobile telephone terminal (T2) that includes means (SIM3) for executing a procedure for making secure a radio link between said mobile telephone terminal (T2) and the mobile telephone network (PLMN2), said procedure including in particular exchanging security information with the mobile telephone network (PLMN2), said exchange of security information usually being supported by a radio link between the mobile telephone terminal (T2) and the mobile telephone network (PLMN2);
- executing the same procedure in the mobile telephone terminal (T2), but with the exchange of security information supported by the link (L4) between the data terminal (PDA2) and the data processing local area network (WLAN2) and by an interworking link (IL2, IWU2) connecting the data processing wireless local area network (WLAN2) and the mobile telephone network (PLMN2); and
- transferring the result of this procedure from the mobile telephone terminal (T2) to the data terminal (PDA2).

2. A method according to claim 1, **characterized in that** the result of the procedure is the production of an encryption key that is transferred from the mobile telephone terminal (T2) to the data terminal (PDA2) and from the mobile telephone network (PLMN2) to an access point (AP2) of the local area network (WLAN2) and **in that** said key is used to encrypt and decrypt data exchanged afterwards over said link (L4) between the data terminal (PDA2) and the data processing local area network (WLAN2).

3. A method according to claim 1, **characterized in that** the data processing local area network (WLAN2) is a wireless network conforming to the IEEE 802.11 standard.

4. A method according to claim 1, **characterized in that** the data processing local area network (WLAN2) is a wireless network conforming to the Bluetooth standard.

5. A method according to claim 1, **characterized in that** the data processing local area network (WLAN2) is an infrared link wireless network.

6. A method according to claim 1, **characterized in that** the data processing local area network (WLAN2) is a cable network.

7. A data terminal (PDA2) including means for setting up a link (L4) with a data processing local area network (WLAN2) and means for setting up a link (L3) with a mobile telephone terminal (T2) including means (SlM3) for executing a procedure for making secure a radio link between said mobile telephone terminal (T2) and a mobile telephone network (PLMN2) that includes an authentication center (AU2), this procedure including in particular exchanging security information with the mobile telephone network (PLMN2), said exchange of security information usually being supported by a radio link between the mobile telephone terminal (T2) and the mobile telephone network (PLMN2), which terminal is **characterized in that**, for implementing the method according to claim 1, it includes:
- means (S2) for commanding execution of said procedure in said mobile telephone terminal (T2) with the exchange of security information supported by a link (L4) between the data terminal (PDA2) and the data processing local area network (WLAN2) and by an interworking link (IL2, IWU2) connecting the data processing local area network (WLAN2) and the mobile telephone network (PLMN2); and
- means (S2) for transferring the result of the above procedure from the mobile telephone terminal (T2) to the data terminal (PDA2) and using said result to encrypt and decrypt data exchanged afterwards over said link (L4) between the data terminal (PDA2) and the data processing local area network (WLAN2).

8. A data terminal according to claim 7, **characterized in that** the link (L4) with a data processing local area network (WLAN2) is a wireless link conforming to the IEEE802.11 standard.

9. A data terminal according to claim 7, **characterized in that** the link (L4) with a data processing local area network (WLAN2) is a wireless link conforming to the Bluetooth standard.

10. A data terminal according to claim 7, **characterized in that** the link (L4) with a data processing local area network (WLAN2) is an infrared link.

11. A data terminal according to claim 7, **characterized in that** the link (L4) with a data processing local area network (WLAN2) is a cable link.

## Patentansprüche

1. Verfahren zur Sicherung einer Verbindung (L4) zwischen einem Daten-Endgerät (PDA2) und einem lokalen Datennetz (WLAN2), welches an ein Mobilfunknetz (PLMN2), das über einen Authentifikationsserver (AU2) verfügt, gekoppelt ist, **dadurch gekennzeichnet, dass** es darin besteht:
- ein Daten-Endgerät (PDA2) an ein Funkendgerät (T2) anzuschließen (L3), welches Mittel (SIM3) zur Ausführung eines geeigneten Vorgangs zur Sicherung einer Funkverbindung zwischen diesem Funkendgerät (T2) und dem Funknetz (PLMN2) umfasst, wobei dieser Vorgang insbesondere in einem Austausch von Sicherheitsdaten mit dem Funknetz (PLMN2) besteht, wobei dieser Austausch üblicherweise von einer Funkverbindung zwischen dem Funkendgerät (T2) und dem Funknetz (PLMN2) unterstützt wird;
- denselben Vorgang im Funkendgerät (T2) auszuführen, wobei der Austausch von Sicherheitsdaten jedoch von der Verbindung (L4) zwischen dem Daten-Endgerät (PDA2) und dem lokalen Datennetz (WLAN2) und von einer interoperablen Verbindung (IL2, IWU2), welche das drahtlose lokale Datennetz (WLAN2) und das Funknetz miteinander verbindet, unterstützt wird;
und anschließend das Ergebnis dieses Vorgangs vom Funkendgerät (T2) an das Daten-Endgerät (PDA2) zu übertragen.

2. Verfahren nach Anspruch 1, **dadurch gekennzeichnet, dass** das Ergebnis des Vorgangs das Erzeugen eines kryptographischen Schlüssels ist, welcher einerseits vom Funkendgerät (T2) an das Daten-Endgerät (PDA2) und andererseits vom Funknetz (PLMN2) an einen Zugangspunkt (AP2) des lokalen Netzes (WLAN2) übertragen wird;
und **dadurch**, dass dieser Schlüssel zum Verschlüsseln und Entschlüsseln der anschließend auf dieser Verbindung (L4) zwischen dem Daten-Endgerät (PDA2) und dem lokalen Datennetz (WLAN2) ausgetauschten Daten verwendet wird.

3. Verfahren nach Anspruch 1, **dadurch gekennzeichnet, dass** das lokale Datennetz (WLAN2) ein der Norm IEEE802.11 entsprechendes drahtloses Netz ist.

4. Verfahren nach Anspruch 1, **dadurch gekennzeichnet, dass** das lokale Datennetz (WLAN2) ein der Norm Bluetooth entsprechendes drahtloses Netz ist.

5. Verfahren nach Anspruch 1, **dadurch gekennzeichnet, dass** das lokale Datennetz (WLAN2) ein drahtloses Netz mit Infrarotverbindung ist.

6. Verfahren nach Anspruch 1, **dadurch gekennzeichnet, dass** das lokale Datennetz (WLAN2) ein drahtgebundenes Netz ist.

7. Daten-Endgerät (PDA2) mit Mitteln zum Herstellen einer Verbindung (L4) mit einem lokalen Datennetz (WLAN2) und Mitteln zum Herstellen einer Verbindung (L3) mit einem Funkendgerät (T2), welches Mittel (SIM3) zum Ausführen eines geeigneten Vorgangs zur Sicherung einer Funkverbindung zwischen diesem Funkendgerät (T2) und einem Funknetz (PLMN2), welches über einen Authentifikationsserver (AU2) verfügt, umfasst, wobei dieser Vorgang insbesondere in einem Austausch von Sicherheitsdaten mit dem Funknetz (PLMN2) besteht, wobei dieser Austausch üblicherweise von einer Funkverbindung zwischen dem Funkendgerät (T2) und dem Funknetz (PLMN2) unterstützt wird;
**dadurch gekennzeichnet, dass** es zur Implementierung des Verfahrens nach Anspruch 1 umfasst:
- Mittel (S2) zum Steuern der Ausführung dieses Vorgangs in diesem Funkendgerät (T2), wobei der Austausch von Sicherheitsdaten von einer Verbindung (L4) zwischen dem Daten-Endgerät (PDA2) und dem lokalen Datennetz (WLAN2) und von einer interoperablen Verbindung (IL2, IWUS), welche das lokale Datennetz (WLAN2) mit dem Funknetz (PLMN2) verbindet, unterstützt wird;
- und Mittel (S2) zur Übertragung des Ergebnisses dieses Vorgangs vom Funkendgerät (T2) an das Daten-Endgerät (PDA2) und zur Verwendung dieses Ergebnisses zum Verschlüsseln und Entschlüsseln der anschließend auf dieser Verbindung (L4) zwischen dem Daten-Endgerät (PDA2) und dem lokalen Datennetz (WLAN2) ausgetauschten Daten.

8. Daten-Endgerät nach Anspruch 7, **dadurch gekennzeichnet, dass** die Verbindung (L4) mit einem lokalen Datennetz (WLAN2) eine der Norm IEEE802.11 entsprechende drahtlose Verbindung ist.

9. Daten-Endgerät nach Anspruch 7, **dadurch gekennzeichnet, dass** die Verbindung (L4) mit einem lokalen Datennetz (WLAN2) eine der Norm Bluetooth entsprechende drahtlose Verbindung ist.

10. Daten-Endgerät nach Anspruch 7, **dadurch gekennzeichnet, dass** die Verbindung (L4) mit einem lokalen Datennetz (WLAN2) eine Infrarotverbindung ist.

11. Daten-Endgerät nach Anspruch 7, **dadurch gekennzeichnet, dass** die Verbindung (L4) mit einem lokalen Datennetz (WLAN2) eine drahtgebundene Verbindung ist.
